# DEMANDE DE BREVET EUROPEEN

(11) **EP 3 742 145 A1**
(43) Date de publication de la demande: **25.11.2020**
(21) Numéro de dépôt: 20175484.3
(22) Date de dépôt: 19.05.2020
(51) Int. Cl.: G01L 5/28, B60T 17/22, B61H 13/36, B61H 13/38, G01M 17/08

(54) **DISPOSITIF ET PROCÉDÉ DE VÉRIFICATION DU FONCTIONNEMENT D'UN CIRCUIT DE FREINAGE D'UN CONVOI FERROVIAIRE, ET CONVOI FERROVIAIRE ÉQUIPÉ D'UN TEL SYSTÈME**

(30) Priorité: 21.05.2019 FR 1905319
(71) Demandeur: Traxens, 13013 Marseille (FR)
(72) Inventeur: TALON, Michel, 13300 SALON DE PROVENCE (FR); DEMARNE, Sébastien, 83640 ST ZACHARIE (FR); JABBOUR, Ziad, 13013 MARSEILLE (FR)
(74) Mandataire: Verriest, Philippe

(57) **Abrégé**

Dispositif de vérification d'un état de freinage d'un dispositif de freinage d'une roue (3) d'un wagon, le dispositif de freinage comprenant :
- une bielle (1) étendue entre deux extrémités selon une direction d'extension, et agencée pour activer un freinage de la roue (3) du wagon lorsque ladite bielle (1) est soumise à une traction,
le dispositif de vérification comprenant:
- un dispositif de mesure d'une valeur représentative d'une déformation de la bielle (1) du dispositif de freinage, le dispositif de mesure de la valeur représentative comprenant au moins une jauge de déformation (4, 4') configurée pour mesurer la valeur représentative de la déformation de la bielle (1),
- un module (6) de contrôle et de communication, le module (6) de contrôle et de communication étant configuré pour commander la mesure par le dispositif de mesure de ladite valeur représentative et pour transmettre ladite valeur à une unité centrale de traitement configurée pour déterminer l'état de freinage en fonction de ladite valeur.

## Description

Le domaine de la présente invention est le domaine ferroviaire, et plus particulièrement le domaine du diagnostic des circuits de freinage des convois ferroviaires.

La présente invention concerne un système de vérification du fonctionnement d'un circuit de freinage d'un convoi ferroviaire, et un convoi ferroviaire équipé d'un tel système. Elle concerne également un procédé de vérification du fonctionnement d'un circuit de freinage mis en œuvre dans un tel système.

Le système de freinage d'un convoi ferroviaire comprend une conduite générale acheminant un fluide de freinage sous pression vers chacun des wagons du train. Le fluide de freinage, qui est généralement de l'air, alimente un ou plusieurs dispositifs de freinage, chacun associé à au moins une roue du wagon. Le dispositif de freinage d'une roue comprend un cylindre de frein qui actionne, par l'intermédiaire d'une timonerie, une ou plusieurs semelles de frein entrant en contact avec la roue en vue de réaliser un freinage. L'essai des freins, dans le monde du transport ferroviaire, est un acte de sécurité essentiel réalisé à des intervalles définis par la règlementation applicable, qui a pour but de s'assurer du bon fonctionnement du système de freinage. Un train est interdit de circulation si ses freins n'ont pas été contrôlés préalablement.
Un convoi ferroviaire est généralement constitué d'un ou plusieurs engins moteurs et de wagons attelés entre eux. Ces wagons peuvent être différents les uns des autres et sont démunis de câblage électrique ou informatique de sorte que tous les wagons composant le train ne peuvent pas être connectés à une alimentation électrique ou à un bus de communication. Dans ces conditions, la vérification du système de freinage ne peut se faire de manière automatisée et/ou distante, et est assurée in situ par des agents, qui doivent vérifier que les freins fonctionnent sur la totalité du convoi, en s'assurant que la conduite générale qui amène l'air aux cylindres de frein et régit le freinage, est fonctionnelle sur toute sa longueur. A cet effet, les agents doivent s'assurer alternativement du bon desserrage du frein, puis du bon serrage du frein, sur chaque wagon et sur chaque roue dudit wagon équipée d'un dispositif de freinage. Cette vérification est réalisée par l'agent au sol qui va manuellement et visuellement vérifier la bonne application puis le relâchement des semelles de frein sur les essieux des roues. Une telle vérification in situ est une opération coûteuse en temps, et fastidieuse compte tenu du nombre de wagons et de freins, et nécessite des agents formés pour cette opération. De plus, une vérification manuelle est sujette à des erreurs humaines dont les conséquences peuvent être catastrophiques. Enfin, une vérification manuelle ne peut se faire que lorsque le convoi ferroviaire est à l'arrêt. D'autre part, en cas de défaut du dispositif de freinage, avec par exemple un frein bloqué en position de serrage, ou et/ou la roue bloquée, la température de la roue peut dépasser plusieurs centaines de degrés Celsius, notamment du fait du frottement de la roue sur le rail. Un dispositif de mesure disposé à proximité de la roue pourrait être détérioré à ces températures.

L'invention a donc pour but de proposer une solution à tout ou partie de ces problèmes, ladite solution pouvant en outre être mise en œuvre dans les wagons existants et en service avec peu de modifications de ces wagons ; l'installation de ladite solution sur les wagons doit pouvoir se faire rapidement, sans passage en maintenance. Ladite solution ne doit pas être intrusive, i.e. une défaillance de ladite solution ne doit pas remettre en cause le système de sécurité du wagon.

A cet effet, la présente invention concerne un dispositif de vérification d'un état de freinage d'un dispositif de freinage d'une roue d'un wagon, le dispositif de freinage comprenant :
- une bielle étendue entre deux extrémités selon une direction d'extension, et agencée pour activer un freinage de la roue du wagon lorsque ladite bielle est soumise à une traction,
le dispositif de vérification comprenant:
- un dispositif de mesure d'une valeur représentative d'une déformation de la bielle du dispositif de freinage, le dispositif de mesure de la valeur représentative comprenant au moins une jauge de déformation configurée pour mesurer la valeur représentative de la déformation de la bielle,
- un module de contrôle et de communication, le module de contrôle et de communication étant configuré pour commander la mesure par le dispositif de mesure de ladite valeur représentative et pour transmettre ladite valeur à une unité centrale de traitement configurée pour déterminer l'état de freinage en fonction de ladite valeur.

Selon ces dispositions, le dispositif de mesure peut être facilement installé sur la bielle, qui est accessible sous le wagon, et peut être disposé à bonne distance de la roue, donc à l'écart des zones pouvant atteindre des températures importantes, notamment en cas de disfonctionnement du dispositif de freinage.

Selon un mode de réalisation, l'invention comprend une ou plusieurs des caractéristiques suivantes, seules ou en combinaison techniquement acceptable.

Selon un mode de réalisation, la bielle est en acier.

Selon un mode de réalisation, un point d'une surface de l'au moins une jauge se projette transversalement à la direction d'extension de la bielle sur un autre point d'une surface extérieure de la bielle, ledit autre point étant situé à l'intérieur d'une portion centrale de la surface extérieure de bielle.

Selon un mode de réalisation, ladite portion centrale a une extension dans la direction d'extension de la bielle, de part et d'autre d'un point équidistant des deux extrémités de la bielle 1.

Selon un mode de réalisation, une longueur de ladite portion centrale est inférieure au tiers de la longueur de la bielle, de préférence inférieure au quart de la longueur de la bielle, de préférence encore inférieure au dixième de la longueur de la bielle, de préférence encore inférieure au centième de la longueur de la bielle 1.

Selon ces dispositions, les conditions de mesure de la déformation sont optimales, car c'est au milieu de sa longueur que la bielle subit les déformations les plus importantes.

Selon un mode de réalisation, l'au moins une jauge de déformation est collée directement sur la bielle.

Selon un mode de réalisation, le dispositif de mesure comprend au moins un corps d'épreuve, l'au moins un corps d'épreuve étant fixé solidairement à la bielle de manière à ce que l'au moins un corps d'épreuve subit une déformation mécanique représentative de la déformation subie par la bielle, chaque fois que la bielle subit une déformation mécanique, l'au moins une jauge de déformation étant collée sur l'au moins un corps d'épreuve.

Selon ces dispositions, il est plus facile de contrôler les conditions du collage de la jauge sur le corps d'épreuve que de contrôler les conditions du collage directement sur la bielle sous le wagon.

Selon un mode de réalisation, l'au moins un corps d'épreuve, est une pièce fixée solidairement, par chacune de ses extrémités, à une bride de fixation, ladite bride de fixation étant elle-même fixée solidairement à la bielle.

Selon un mode de réalisation, l'au moins un corps d'épreuve comprend au moins une bride de fixation qui forme avec l'au moins un corps d'épreuve une pièce d'un seul tenant.

Selon un mode de réalisation, l'au moins une jauge de déformation comprend au moins deuxjauges de déformation.

Selon un mode de réalisation, l'au moins deuxjauges de déformations comprend deuxjauges de déformation positionnées de part et d'autre de la bielle, en deux points symétriques par rapport à la bielle, le long d'une direction transversale à la direction d'extension de la bielle.

Selon ces dispositions, chaque mesure comprend deux points de mesures ; les mesures sont ainsi globalement plus fiables.

Selon un mode de réalisation, la valeur représentative de la déformation de la bielle est une moyenne des valeurs mesurées respectivement par chacune des deuxjauges.

Selon un mode de réalisation, le dispositif comprend un capteur de mesure configuré pour mesurer une température de la bielle et pour transmettre la température mesurée au module de contrôle et de communication, et un module de compensation configuré pour déterminer une valeur compensée représentative de la déformation de la bielle en fonction de la valeur représentative mesurée par l'au moins une jauge et de la température mesurée par sur la bielle.

Selon un mode de réalisation, le module de compensation est implémenté dans le module de contrôle et de communication, ou dans l'unité centrale.

Selon ces dispositions, il est possible de s'affranchir de l'effet de déformation dû à la dilatation naturelle du matériau constitutif de la bielle.

Selon un mode de réalisation, le module de compensation est configuré pour déterminer la valeur compensée en fonction d'au moins un paramètre, l'au moins un paramètre étant déterminé par un module de calibration du module de compensation.

Selon un mode de réalisation, l'au moins un paramètre déterminé par le module de calibration comprend des coefficients d'un polynôme du 3^{ème} degré, caractéristique d'une bielle et des coefficients d'un polynôme du 1^{er} degré caractéristique des composants électroniques constitutifs d'un capteur de déformation compris dans la ou les jauges.

Selon un mode de réalisation, l'au moins une jauge de déformation comprend un capteur comprenant au moins un composant électronique de mesure de contrainte.

Selon un mode de réalisation, l'au moins un composant électronique comprend une pluralité de composants électroniques assemblés de manière à former un pont de Wheatstone.

Selon ces dispositions, il est possible de mesurer de faibles déformations.

Selon un mode de réalisation, la pluralité de composants électroniques comprend 4 composants électroniques de mesure de contrainte.

L'invention concerne également un wagon équipé d'un dispostif de vérification selon l'un des modes de réalisation de l'invention.

L'invention concerne également un procédé de vérification d'un état de freinage d'un dispositif de freinage d'une roue d'un wagon, le dispositif de freinage comprenant:
- une bielle étendue entre deux extrémités selon une direction d'extension, et agencée pour activer un freinage de la roue du wagon lorsque ladite bielle est soumise à une traction, et
- un dispositif de vérification selon l'un des modes de réalisation présentés ci-avant de l'invention,
le procédé comprenant les étapes suivantes :
- commande, par le module de contrôle et de communication, de la mesure de la valeur représentative de représentative de la déformation de la bielle,
- mesure, par l'au moins une jauge de déformation, de la valeur représentative de la déformation de la bielle,
- détermination d'un état de freinage en fonction de la valeur représentative de la déformation de la bielle.

Selon un mode de mise en œuvre, le procédé selon l'invention comprend une ou plusieurs des caractéristiques suivantes, seules ou en combinaison techniquement acceptable.

Selon un mode de mise en œuvre, l'au moins une jauge de déformation comprend au moins deuxjauges de déformation et dans lequel l'étape de mesure comprend une sous-étape de calcul d'une moyenne des valeurs mesurées par les au moins deuxjauges de déformation.

Selon un mode de mise en œuvre, le procédé comprend une étape de mesure d'une température de la bielle et une étape de détermination d'une valeur compensée représentative de la déformation de la bielle en fonction de la température mesurée, de la valeur représentative mesurée par l'au moins une jauge, et d'au moins un paramètre de calibration.

Selon un mode de mise en œuvre, le procédé comprend une étape de calibration pour déterminer l'au moins un paramètre de calibration.

Selon un mode de mise en œuvre, l'au moins un paramètre de calibration comprend des coefficients d'un polynôme de 3^{ème} degré qui caractérise une déformation de la bielle équipée de l'au moins une jauge de déformation en fonction d'une température, et des coefficients d'un polynôme du 1^{er} degré qui caractérise une dérive d'une mesure de la déformation par les composants électroniques en fonction d'une température.

Selon un mode de mise en œuvre, les coefficients du polynôme de 3^{ème} degré sont estimés par des mesures de déformation de la bielle équipée de la ou des jauges, les mesures de déformation étant réalisées à différentes températures en étuve de laboratoire.

Selon un mode de mise en œuvre, les coefficients du polynôme de 1^{er} degré sont estimés par des mesures de déformation de la bielle équipée de la ou des jauges, les mesures de déformation étant réalisées à différentes températures, sans l'application de contraintes mécaniques sur la bielle, après installation sur un wagon.

Pour sa bonne compréhension, un mode de réalisation et/ou de mise en oeuvre de l'invention est décrit en référence aux dessins ci-annexés représentant, à titre d'exemple non limitatif, une forme de réalisation ou de mise en œuvre respectivement d'un dispositif et/ou d'un procédé selon l'invention. Les mêmes références sur les dessins désignent des éléments similaires ou des éléments dont les fonctions sont similaires.
[Fig. 1] est une vue schématique de la timonerie associée au système de freinage d'un wagon à bogies ;
[Fig. 2] est une vue en perspective d'un mode de réalisation du dispositif de mesure de déformation d'une bielle ;

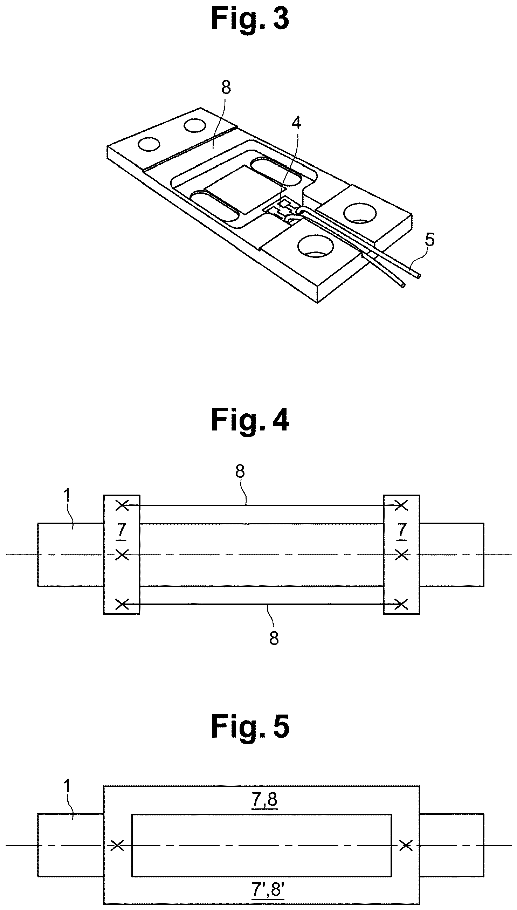

[Fig. 3] est une vue en perspective d'un corps d'épreuve équipé d'une jauge de déformation ;
[Fig. 4] est une vue schématique d'un mode de réalisation du dispositif de mesure de déformation d'une bielle, avec un corps d'épreuve séparé des brides de fixation à la bielle;
[Fig. 5] est une vue schématique d'un mode de réalisation du dispositif de mesure de déformation d'une bielle, avec un corps d'épreuve et ses brides de fixation d'un seul tenant;
[Fig. 6] est une vue en perspective d'un mode de réalisation du dispositif de mesure de déformation d'une bielle, couplé à un module de contrôle et de communication;
[Fig. 7] est un schéma électrique simplifié d'un mode de réalisation d'une jauge de déformation ;
[Fig. 8] est un organigramme simplifié d'un mode de mise en œuvre du procédé selon l'invention.

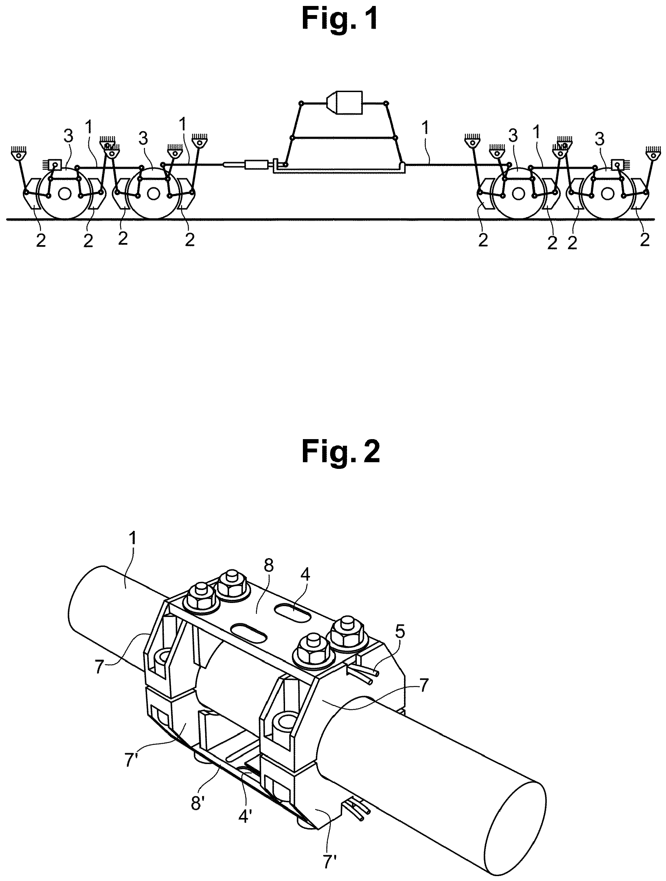

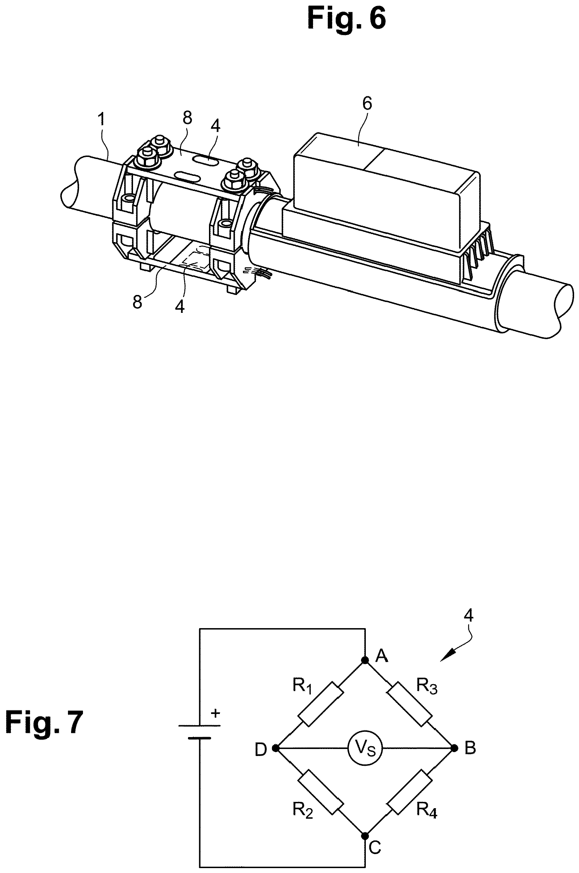

Sur la majorité des wagons, comme illustré sur la figure 1, c'est une bielle 1, de préférence métallique, de préférence en acier, qui subit une traction pour actionner le dispositif de freinage d'une roue. Ladite bielle a une extension longitudinale de quelques mètres. Le dispositif de freinage d'une roue 3 comprend au moins une semelle 2 ou sabot de freinage 2, qui sous l'effet d'une traction de la bielle 1 est serrée contre la roue 3. Les bielles 1 sont accessibles et se trouvent sous les wagons.
La traction subie par la bielle 1 crée une déformation de celle-ci, qu'il est possible de mesurer au moyen d'au moins une jauge de déformation 4. La déformation subie par la bielle 1 est représentative de l'état de freinage du dispositif de freinage de la roue.
Selon un mode de réalisation, ladite jauge de déformation 4 est collée directement sur la bielle 1. Selon un autre mode de réalisation, ladite jauge de déformation 4 est collée sur un corps d'épreuve 8 placé sur ladite bielle 1. La jauge de déformation 4 est configurée pour mesurer directement la déformation subie par la bielle 1, lorsque la jauge de déformation est collée directement sur la bielle 1. Lorsque la jauge de déformation 4 est collée sur le corps d'épreuve 8, la jauge de déformation 4 est configurée pour mesurer directement la déformation subie par le corps d'épreuve 8 sous l'effet de la déformation de la bielle 1. Lorsque la jauge de déformation 4 est collée sur le corps d'épreuve 8, la jauge de déformation 4 est donc configurée pour mesurer indirectement la déformation subie par la bielle 1. L'au moins un corps d'épreuve 8 est alors mécaniquement fixé à la bielle 1 de manière à ce que la déformation mécanique de la bielle soit mécaniquement et fidèlement retransmise au corps d'épreuve 8, pour être mesurée par la jauge de déformation 4 dudit corps d'épreuve 8.
Pour optimiser la sensibilité du dispositif de mesure, l'au moins une jauge 4 de déformation est disposée sur une portion centrale de la bielle 1 qui s'étend de part et d'autre du milieu de la bielle 1; c'est en effet au milieu de la bielle 1 que les contraintes mécaniques sont les plus importantes. De préférence, ladite portion centrale a une longueur inférieure au tiers de la longueur de la bielle. De préférence encore, ladite portion centrale a une longueur inférieure au quart de la longueur de la bielle. De préférence encore, ladite portion centrale a une longueur inférieure au dixième de la longueur de la bielle. De préférence encore, ladite portion centrale a une longueur inférieure au centième de la longueur de la bielle.
Selon un mode de réalisation, l'au moins une jauge de déformation comprend deux jauges de déformation 4, 4' collée directement sur la bielle 1 et disposées symétriquement de part et d'autre de la bielle 1, à 180 degrés l'une de l'autre. Selon un autre mode de réalisation, l'au moins un corps d'épreuve comprend deux corps d'épreuve 8, 8' disposés symétriquement de part et d'autre de la bielle 1, à 180 degrés l'un de l'autre, avec une jauge de déformation 4,4' collée respectivement sur chaque corps d'épreuve 8,8'. Une moyenne des valeurs mesurées par chaque jauge de déformation 4, 4', est calculée pour évaluer la traction subie par la bielle 1.
Selon un mode de réalisation, le corps d'épreuve 8 est une pièce fixée mécaniquement et solidairement, par chacune de ses extrémités, à une bride 7 de fixation, ladite bride de fixation 7 étant elle-même fixée mécaniquement et solidairement à la bielle 1, de sorte que toute déformation mécanique subie par la bielle 1 est transmise mécaniquement, par l'intermédiaire de chaque bride de fixation 7, au corps d'épreuve 8.
Selon un autre mode de réalisation, le corps d'épreuve 8 forme avec ses brides de fixation une pièce d'un seul tenant 7, 8 configurée pour être fixée mécaniquement et solidairement sur la bielle 1.
Lorsque deux corps d'épreuve 8, 8' sont disposés de part et d'autre de la bielle 1, une bride de fixation 7 étant fixée à chaque extrémité d'un corps d'épreuve 8 et une autre bride de fixation 7' étant fixée à chaque extrémité d'un autre corps d'épreuve 8', chaque bride de fixation 7 fixée audit corps d'épreuve 8 étant configurée pour s'appuyer mécaniquement sur une partie de la surface de la bielle 1, et chaque autre bride de fixation 7' fixée à l'autre corps d'épreuve 8' étant configurée pour s'appuyer mécaniquement sur une partie opposée de la surface de la bielle, de sorte que la bielle 1 est prise en tenaille entre la bride de fixation 7 fixée audit corps d'épreuve 8 et l'autre bride de fixation 7' fixée à l'autre corps d'épreuve 8', la bride de fixation 7 fixée audit corps d'épreuve 8 et l'autre bride de fixation 7' fixée à l'autre corps d'épreuve 8' étant maintenue serrée l'une contre l'autre par un moyen de serrage.
Selon un mode de réalisation, la valeur de la traction mesurée par le ou les corps d'épreuve 8 disposés sur la bielle 1 est compensée en température pour s'affranchir de la dilatation naturelle du matériau constitutif de la bielle 1. A cet effet une température de la bielle 1 est mesurée par un capteur de température, non représenté sur les dessins, et un module de compensation, également non représenté sur les dessins, est configuré pour déterminer une valeur compensée représentative de la déformation de la bielle 1, en fonction de la ou des valeur(s) représentative(s) mesurée(s) par la ou les jauge(s) et de la valeur de la température de la bielle mesurée par le capteur de température. Le résultat de la mesure compensée donne alors l'état du dispositif de freinage actionné par la bielle 1. Selon un mode de réalisation, le module de compensation est implémenté dans le module de contrôle et de communication, ou dans l'unité centrale.
La ou les jauges 4,4' collée(s) sur la bielle ou sur le corps d'épreuve 8,8' fixé sur la bielle 1, est (sont) reliée(s) électriquement à un module 6 de contrôle et de communication, configuré pour contrôler la ou les jauges 4,4' et pour transmettre à une unité de traitement centrale (non représentée sur les figures) les valeurs mesurées par la ou les jauges 4,4'.
Le capteur de température est également couplé au module 6 de contrôle et de communication et configuré pour transmettre la température mesurée au module 6 de contrôle et de communication ; la température mesurée peut alors être transmise à l'unité centrale avec la valeur représentative non compensée mesurée par la ou les jauges 4,4' pour être exploitées par le module de compensation implémenté dans l'unité centrale ; la température mesurée peut aussi être exploitée, avec la valeur représentative non compensée mesurée par la ou les jauges 4,4', par un module de compensation implémenté au sein du module 6 de contrôle et de communication, afin d'obtenir une valeur compensée représentative de la déformation de la bielle 1.
La valeur compensée est déterminée par le module de compensation en fonction de la température mesurée de la bielle 1, de la valeur non compensée de la déformation mesurée par la ou les jauges 4, 4', et d'au moins un paramètre déterminé par un module de calibration du module de compensation.
La détermination d'une valeur compensée en température, représentative de la déformation de la bielle, suppose d'avoir déterminé au préalable une fonction qui relie une valeur de la température mesurée sur la bielle à une valeur de la déformation de la bielle, causée exclusivement par ne la température, mesurée par la ou les jauges 4,4'.
Or le système considéré ici comprend la bielle, équipée d'une ou plusieurs jauges 4,4', et un capteur auquel la ou les jauges 4,4' sont couplées. Ainsi, non seulement la température de la bielle a un effet de dilatation ou de rétractation volumique de la bielle qui détermine une valeur de déformation mesurée par les jauges, mais la température a également un effet perturbateur sur les composants électroniques du capteur en introduisant un biais supplémentaire de mesure de la déformation de la bielle.
Le module de calibration est donc configuré pour déterminer successivement :
- une première courbe caractérisant la déformation de la bielle équipée de la ou des jauges (4,4'), en fonction de la température ; une estimation de la première courbe par un polynôme du 3^{ème} degré est généralement utilisée, les coefficients du polynôme étant estimés par le module de calibration, après une série de mesures de déformation de la bielle équipée de la ou des jauges, à différentes températures en étuve de laboratoire.
- une deuxième courbe caractérisant, en fonction de la température, la dérive de la mesure de la déformation dues aux composants électroniques du capteur; une estimation de la deuxième courbe par un polynôme du 1^{er} degré est généralement utilisée, les coefficients du polynôme étant estimés par le module de calibration à l'issue de deux mesures de déformation de la bielle, réalisées à des températures différentes et sans l'application de contraintes mécaniques.
Selon un mode de réalisation, l'au moins un paramètre déterminé par le module de calibration comprend les coefficients du polynôme du 4^{ème} degré, caractéristique de la bielle équipée de la ou des jauges 4,4', et les coefficients du polynôme du 1^{er} degré caractéristique des composants électroniques de la ou des jauges 4, 4'.
Selon un mode de réalisation, la jauge de déformation est une simple jauge de contrainte, configurée d'une manière connue de l'homme du métier pour générer une tension électrique aux bornes de la jauge en fonction de la déformation mécanique subie par la jauge. De préférence, comme cela est illustré sur la figure 7, la jauge de déformation comprend quatre jauges de contraintes R1, R2, R3, R4 assemblées électriquement, d'une manière connue de l'homme du métier, pour former un pont de Wheastone. Ainsi, des déformations de faible amplitude peuvent être mesurées.

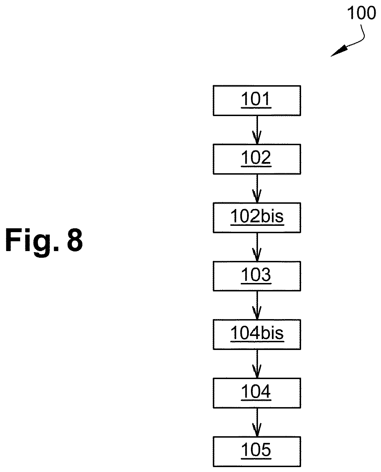

Selon un aspect l'invention concerne également un procédé 100 de vérification d'un état de freinage d'un dispositif de freinage d'une roue 3 d'un wagon, le dispositif de freinage comprenant:
- une bielle 1 étendue entre deux extrémités selon une direction d'extension, et agencée pour activer un freinage de la roue 3 du wagon lorsque ladite bielle 1 est soumise à une traction, et
- un dispositif de vérification selon l'une des variantes décrites précédemment ; le procédé comprenant les étapes suivantes, en référence à la figure 8 :
- commande 101, par le module 6 de contrôle et de communication, de la mesure de la valeur représentative de la déformation de la bielle 1,
- mesure 102, par l'au moins une jauge de déformation 4, 4', de la valeur représentative de la déformation de la bielle 1,
- détermination 105 d'un état de freinage en fonction de la valeur représentative de la déformation de la bielle 1.

Selon un mode de mise en œuvre l'au moins une jauge de déformation 4, 4' comprend au moins deuxjauges de déformation et dans lequel l'étape de mesure comprend une sous-étape 102bis de calcul d'une moyenne des valeurs mesurées par les au moins deuxjauges de déformation.

Selon un mode de mise en œuvre, le procédé comprend une étape 103 de mesure d'une température de la bielle 1 et une étape de détermination 104 d'une valeur compensée représentative de la déformation de la bielle 1 en fonction de la température mesurée, de la valeur représentative mesurée par l'au moins une jauge, et d'au moins un paramètre de calibration.

Selon encore un mode de mise en œuvre, le procédé comprend une étape 104bis de calibration pour déterminer l'au moins un paramètre de calibration.

## Revendications

1. Dispositif de vérification d'un état de freinage d'un dispositif de freinage d'une roue (3) d'un wagon, le dispositif de freinage comprenant :
- une bielle (1) étendue entre deux extrémités selon une direction d'extension, et agencée pour activer un freinage de la roue (3) du wagon lorsque ladite bielle (1) est soumise à une traction,
le dispositif de vérification comprenant:
- un dispositif de mesure d'une valeur représentative d'une déformation de la bielle (1) du dispositif de freinage, le dispositif de mesure de la valeur représentative comprenant au moins une jauge de déformation (4, 4') configurée pour mesurer la valeur représentative de la déformation de la bielle (1),
- un module (6) de contrôle et de communication, le module (6) de contrôle et de communication étant configuré pour commander la mesure par le dispositif de mesure de ladite valeur représentative et pour transmettre ladite valeur à une unité centrale de traitement configurée pour déterminer l'état de freinage en fonction de ladite valeur.

2. Dispositif de vérification selon la revendication (1), dans lequel un point d'une surface de l'au moins une jauge (4,4') se projette transversalement à la direction d'extension de la bielle (1) sur un autre point d'une surface extérieure de la bielle (1), ledit autre point étant situé à l'intérieur d'une portion centrale de la surface extérieure de bielle (1).

3. Dispositif de vérification selon l'une des revendications précédentes, dans lequel l'au moins une jauge de déformation (4,4') est collée directement sur la bielle (1).

4. Dispositif de vérification selon l'une des revendications 1 ou 2, dans lequel le dispositif de mesure comprend au moins un corps d'épreuve (8, 8'), l'au moins un corps d'épreuve (8, 8') étant fixé solidairement à la bielle (1) de manière à ce que l'au moins un corps d'épreuve (8, 8') subit une déformation mécanique représentative de la déformation subie par la bielle (1), chaque fois que la bielle (1) subit une déformation mécanique, l'au moins une jauge de déformation (4, 4') étant collée sur l'au moins un corps d'épreuve (8, 8').

5. Dispositif de vérification selon l'une des revendications précédentes, dans lequel le dispositif de mesure de la valeur représentative comprend au moins deux jauges de déformation (4, 4').

6. Dispositif de vérification selon l'une des revendications précédentes, comprenant un capteur de mesure configuré pour mesurer une température de la bielle (1) et pour transmettre la température mesurée au module de contrôle et de communication, et un module de compensation configuré pour déterminer une valeur compensée représentative de la déformation de la bielle en fonction de la valeur représentative mesurée par l'au moins une jauge (4, 4') et de la température mesurée sur la bielle (1).

7. Dispositif de vérification selon la revendication 6, dans lequel le module de compensation est configuré pour déterminer la valeur compensée en fonction d'au moins un paramètre, l'au moins un paramètre étant déterminé par un module de calibration du module de compensation.

8. Dispositif de vérification selon l'une des revendications précédentes, dans lequel l'au moins une jauge de déformation (4, 4') comprend un capteur comprenant au moins un composant électronique de mesure de contrainte (R1, R2, R3, R4).

9. Dispositif de vérification selon la revendication 8, dans lequel le capteur comprend une pluralité de composants électroniques (R1, R2, R3, R4) assemblés de manière à former un pont de Wheatstone.

10. Wagon équipé d'un dispostif de vérification selon l'une des revendications précédentes.

11. Procédé (100) de vérification d'un état de freinage d'un dispositif de freinage d'une roue (3) d'un wagon, le dispositif de freinage comprenant:
- une bielle (1) étendue entre deux extrémités selon une direction d'extension, et agencée pour activer un freinage de la roue (3) du wagon lorsque ladite bielle (1) est soumise à une traction, et
- un dispositif de vérification selon l'une des revendications 1 à 9,
le procédé comprenant les étapes suivantes :
- commande (101), par le module (6) de contrôle et de communication, de la mesure de la valeur représentative de représentative de la déformation de la bielle (1),
- mesure (102), par l'au moins une jauge de déformation (4, 4'), de la valeur représentative de la déformation de la bielle (1),
- détermination (105) d'un état de freinage en fonction de la valeur représentative de la déformation de la bielle (1).

12. Procédé (100) selon la revendication 11, dans lequel le dispositif de mesure de la valeur représentative comprend au moins deux jauges de déformation (4, 4') et dans lequel l'étape de mesure (102) comprend une sous-étape de calcul (102bis) d'une moyenne des valeurs mesurées par les au moins deux jauges de déformation.

13. Procédé (100) selon l'une des revendications 10 ou 11, comprenant une étape de mesure (103) d'une température de la bielle (1) et une étape de détermination (104) d'une valeur compensée représentative de la déformation de la bielle (1) en fonction de la température mesurée, de la valeur représentative mesurée par l'au moins une jauge, et d'au moins un paramètre de calibration.

14. Procédé (100) selon la revendication 13, comprenant une étape (104bis) de calibration pour déterminer l'au moins un paramètre de calibration.
